# EUROPEAN PATENT SPECIFICATION

(11) **EP 0 959 265 B1**
(45) Date of publication and mention of the grant of the patent: **26.02.2003**
(21) Application number: 99106386.8
(22) Date of filing: 29.03.1999
(51) Int. Cl.: F16F 9/512, B60G 17/08

(54) **Car suspension system**
Fahrzeugaufhängungssystem
Système de suspension de véhicule

(30) Priority: 06.04.1998 IT PN980028
(43) Date of publication of application: 24.11.1999
(73) Proprietor: Pignat, Alberto, 33077 Sacile (Pordenone) (IT)
(72) Inventor: Pignat, Alberto, 33077 Sacile (Pordenone) (IT)

(56) References cited:
- EP-A- 0 394 079
- EP-A- 0 661 184
- FR-A- 1 562 113
- GB-A- 1 142 682
- GB-A- 2 164 417
- US-A- 3 936 039

## Description

The present invention relates to a suspension system for cars and the like comprising means adapted to resiliently react against unevenness of the ground and comprising amortization means of the. consequent oscillations caused by the recovery of said resilient means.

From GB-A-2164417 is known an adjustable hydraulic damper for cars constituted by a working cylinder which is divided by a damping piston secured on a piston rod into two working chambers filled with oil, the damper having at least one throttle member, a compensating chamber formed between the working cylinder and a surrounding cover tube, and a coil spring which surrounds and is coaxial with the cover tube and which is supported by an axially displaceable annular piston that is exposed to the pressure of the oil in a lifting cylinder, the upper working chamber being connected to the compensating chamber by means of a connecting passage which is in communication with the lifting cylinder through an opening and which leads into the compensating chamber through a port which is closable by a valve.

This hydraulic damper permits to increase the damping action on the cars due to the lifting of the piston housed in the lifting cylinder and consequently compression of the coil spring, when the oil is transferred from the upper working chamber to the compensating chamber, through a non-return valve and a valve, and from the compensating chamber to the lifting cylinder through the opening.

The present invention relates to a car suspension system which, still providing an additional damping action on cars, is made with a construction different that that disclosed by GB-A-2164417.

The invention is defined by a suspension system having the features of claim 1.

Said and further features will be apparent from the following description and from the alleged drawings, where:
Fig.1 represents a front view of the suspension system according to the invention;
Fig.2 represents an axial cross section taken according to steady position of the car;
Fig.3 represents an axial cross section taken in a medium load operation of the car;
Fig.4 represents an axial cross section taken in a maximum load operation of the car.

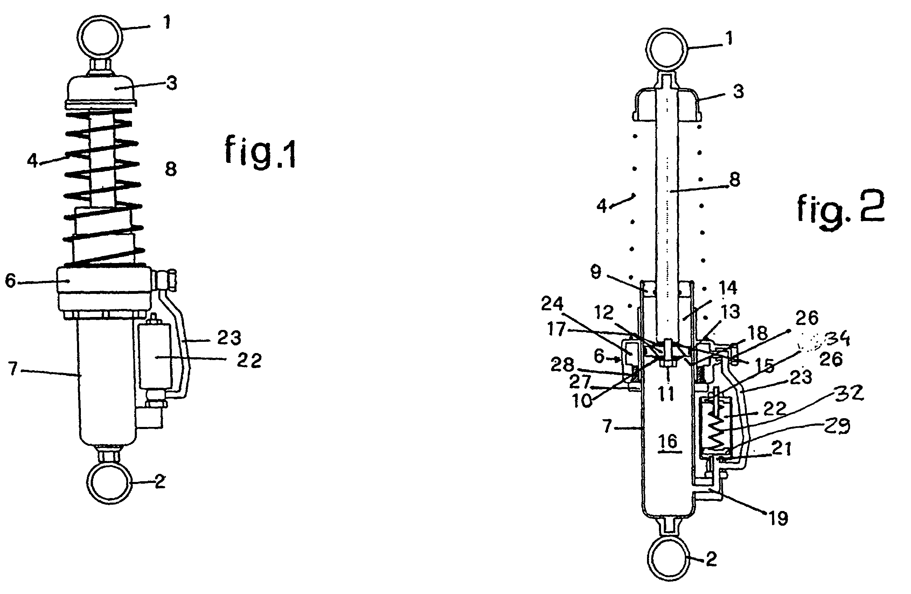

The device according to the invention comprises two connections respectively 1 to the body of the car and 2 to the wheel structure (Figs.1,2,3,4). The connection 1 is fixed to a cover 3, which is adapted to cooperate with a top of a pressure spring 4, the bottom of which is resting on the upper surface of a sleeve 6, which is adapted to slide on an external surface of a chamber 7. A stem 8 is fixed to the cover 3, which is slidable on a gasket 9, which is fixed to the top of chamber 7.
As it will be apparent later on, the stem 8 is adapted to assume substantially strong dimensions as well as it can increase the reaction effect of the suspension of a car against the impact with a ground unevenness.
As for the spring 4, it is adapted to be made of a constant pitch harmonic steel wire with a substantially small section in such a way that the spring could be provided of a substantially strong elasticity.

In correspndence of the bottom of stem 8, a piston 12 is fixed by means of a bolt 11. Piston 12 is provided with gaskets 13 for the sealing in an oil bath, which comprises an upper portion 14 and a lower portion 16 in the chamber 7, said portions being divided by the piston 12. This latter presents a plurality of two series 17,18 of feeding channels between the portions 14,16. Indeed the channels 17 task is to transfer the oil, which belongs to the portion 14 towards the portion 16 when the piston 12 rises, whereas the channels 18 task is to transfer the oil, which belongs to the portion 16, towards the portion 14, when the piston 12 lowers.

The rising and the lowering of the piston 12 is due, as it will be apparent later on, to the impact of the suspension with the reaction caused by an unevenness of the ground. The rising of the piston 12 and the subsequent transfer of oil portion 14 into the oil portion 16 of the chamber 7, is braked by some elastic blades 10 in such a way that the oil transfer happens by overcoming their elastic resistance through their soft bending, which allows said transfer. At contrary the oil transfers from portion 16 to portion 14 when the piston 12 lowers and such a transfer is braked by some elastic blades 15, which are substantially more elastic than the blades 10.

Therefore the elastic resistance, which the blades 15 present to the oil transfer from portion 16 to portion 14 of the chamber 7 is substantially lower that the resistance of the blades 10. Consequently the lowering of the piston 12 (due to a ground unevenness) happens substantially by overcoming the elastic resistance of the spring 4. In the same manner the rising of the piston 12 (due to a ground depression) happens substantially thanks to the elastic action of the spring 4, which yields a portion of the energy, which is stored in the steady conditions. Therefore the oil portions 14,16 viscosity, the piston 12, the channels 17,18, the blades 10,15 represent amortizing means of the suspension according to the invention.

The shape of the described device allows to state that the movement of the piston 12, which is due in the chamber 7 to an unevenness of the ground, is elastically controlled (more after a wheel impact against an unevenness than after a wheel impacts a depression) by the spring 4. Indeed such a spring transmits the wheel a soft movement as well as a substantial comfort to the passengers or to the goods transported by the car.

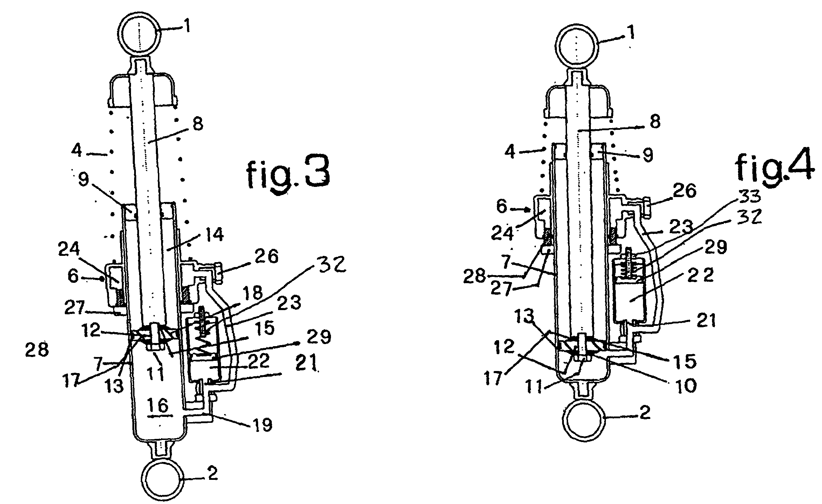

As for the spring 4, it represents resilient means, which are connected to the piston 12 starting from an operating position (Figs.3.4) up to the rest position (Fig.2).
The bottom part of the chamber 7 presents a duct 19, which is adapted to feed two ways: a first way 21 (which is adapted to feed a second chamber 22) and a second way made of a flexible duct 23, which is adapted to feed a circular duct 24 of the sleeve 6 around the chamber 7. A clamping screw 26 is applied on the sleeve 6, which normally rests due to the action of the spring 4 on a ring 27 fixed to the chamber 7. The sleeve 6 is adapted to run upwards on a slide ring 28, which is fixed to the ring 27. Such a run is obtained thanks to the action of the oil 16, which passes through the ducts 19,23 when the piston 12 moves downwards in the chamber 7. During such a movement the ring 4 is subjected to a further pressure whis is transformed into a substantial increase of elastic energy.

Such a substantial increase of elastic energy is due to a series of factors:
- the substantially considerable section of the stem 8, which enters chamber 7 and reduces the volume of the same chamber with a consequent increase of the oil volume, which enters the duct 19 and the way 21;
- the substantially considerable oil volume, which passes into the sleeves 19,23 and consequently the considerable run upwards of the sleeve 6 whenever the piston 12 lowers due to the impact oif the wheel against an unevenness of the ground.

Consequently the spring 4 acts not only for getting elastic the reaction of the suspension due to the said impact but also for increasing in real time the action of the spring 4 with the amortizing effect of the suspension within an integrative process with the amortizing effect of said suspension.
Said integrative means are:
- the oil lower portion 16, which feeds the ducts 19,23;
- the duct 24 of the sleeve 6;
- last but not least the substantially considerable section of the stem 8, as already stated.

As for the chamber 22, it presents inside a plate 29, which is provided with an O-ring 31. As it will apparent later on, tha plate 29, under the pressure of oil 16 is adapted to move upwards against the action of a spring 32 up to a position represented in Fig.4, where the plate 29 stops against an end of stroke screw 33, which can be adjusted by screwing on a upperplate 34 of the chamber 22. At this point all oil 16 pushed by the stem 8 is transferred into the duct 19, then passes into the duct 23 and causes the sleeve 6 to be risen with a consequent increase of elastic energy stored by the spring 4. Said spring helps the suspension to recover its ' steady position as said spring pushes upwards the cover 3, the stem 8 and then the piston 12 from the position of Fig.4 to the position of Fig.2

What up to now stated is referred to the case when a wheel impacts an unevenness of the ground and it is pushed upwards with the consequence that the length of the suspension is reduced.
In the case a wheel impact a depression, the suspension is obliged to lengthen, as ' the piston 12 rises and a bit of oil from the portion 14 is transferred into the portion 16 of the chamber 7.

Such a transfer of oil has practically no influence on the sleeve 6, whereby the suspension returns in the position of Fig.2 due to the fact that the weight of the car exerts an action on the suspension, whereas the vibrations are amortized by the amortizing means, i.e. the oil of the portion 16, which is transferred into the portion 14. In any case the extention of the suspension with respect to its compression surely represents a quite fortuitous event.
As for the amortizing effect of the suspension, which causes a reduction of its lengthwise dimension, it is practically due to the elastic effect of the spring 4.
Therefore the oil of the portion 16, the duct 19, the way 21, the chamber 22, the duct 23, the circular duct 24, the sleeve 6 and the stem 8 represent means which are adapted to integrate the elastic action of the spring 4 with the amortizing effect (14,16,17,18,10,15) of the suspension.
Indeed just after the piston 12 has completed the initial phase of its run and is going to complete its run downwards, the transfer of the oil belonging to the portion 16 causes the plate 29 be moved up to end of the stroke and then the whole oil feeds the duct 23, pushes upwards the sleeve 6, whereby the spring 4 is compressed. At this point the spring 4 pushes upwards the cover 3 and then the stem 8 and the piston 12, whereby the suspension car acquire the steady condition. In such a way the spring 4 makes the 14 oil portion feed the 16 oil portion of the chamber 7 and puts in action the suspension amortizing process in the sense that it helps to damp the oscillations around the steady conditions of the same suspension.

The device according to the invention operates according to the following way: in steady conditions, i.e. when the car is steady, the action exerted by the weight of the car makes the spring 4 be preloaded, whereby the piston 12 is adapted to acquire the position of Fig.2. In such a position the sleeve 6 leans on the ring 27, the oil of the portion 16 exerts no significant action on the plate 29, everything according to Fig.2.

In case an unevenness of the ground against the wheel of a car causes a middle entity action, the situation is represented by Fig.3, where the piston 12 overcomes just a bit the middle height of the chamber 7, the oil of the portion 16 partially enters through the channel 18 into the portion 14, but the stem 8 thanks to it space allows just a bit of the portion 16 oil to become oil portion 14, whereas it partially obliges the oil portion 16 to enter into the duct 19, then into the chamber 22 and just a bit into the flexible duct 23. Consequently the sleeve 6 maintains the position of Fig.2. The suspension remains confortable as long as the chamber 22 saves a space for the oil.

In case the entity of the unevenness of the ground as well as the effects of the speed and of load of the car are substantially more consistent than before, the piston 12 reaches the position represented in Fig.4, the most oil of the portion 16 enters the duct 19, the plate 29 arrives up to the top of the chamber 22,whereby more oil than in Fig.3 passes through the duct 23, enters the duct 24 of the sleeve 6 and exerts on it such a pressure that the sleeve 6 arises and exertes an action of further pressure of the spring 4. Such an action makes the cover 3 raise and then makes the car body (controlled by the described suspension) raise, too, through a series of oscillations, which are amortized by the shock absorber.

In case a wheel of the car impacts a depression, the entire suspension is subjected to lenghten, the piston 12 involves the top of the chamber 7 and then it recovers the previous position as soon as the depression is overcome. The means (14,15,17,10) amortize the recovery of the piston 12 up to the steady position through a series of **oscillations.**

At last, in the case a wheel of the car impacts in a curve a ground depression, the piston 12 can reach at most the position represented in Fig.4, but, just after overcoming such a depression, the piston is urged to the steady position of Fig.2 through a series of oscillations, which are amortized by the shock absorber as explained before. Moreover no suspension of the remaining wheels is involved by the suspension of the wheel, which impacted the unevenness. The same result is obtained whenever a wheel impacts either a depression or an unevenness both in a straightaway and in a stop distance.

It is possible to summarize the plurality of the advantages, which could be offered by the already described solution:
- at first it is a single-chamber solution, similar to the De Carbon one, and therefore the bi-chamber solution is discarded, where the piston is operating in the inner chamber, whereas the outer chamber is filled with oil; nitrogen takes up the room of the stem and could produce emulsion;
- just oil is used both in the upper and in the lower part of the chamber;
- a substantially thin stem 8 couldn't be used in order to avoid the drawback of too high amplitudes of the plate, which is placed between oil and nitrogen;
- in case the shock absorber is subjected to a substantially heavy action, the oil compressed by the piston 12 acts on the increase of load of the spring 4, whereby the suspenion is is urged to make the car recover the steady position;
- it is possibile to give the spring 4 a substantially reduced diameter with respect to the tradition al solutions, whereby the spring could be given a substantial elasticity with a consequent increase of comfort;
- the spring is of a constant, not variable pitch type, with the advantage that a double calibration could be avoided;
- the amortizing means (14,16,17,18,10,15) are substantially proportioned to the spring 4, in the sense that they could really brake the recover of the spring 4 to the steady position;
- when the car takes a curve and consequently laterally leans, the oil portion 16 acts on the spring 4 and through the sleeve 6 makes increase the action of the same spring and makes the car recover the steady position; in addition no other suspension of the car is involved and consequently a substantially horizontal position of the car is assured;
- in correspondence of the release, i.e. when the action of the suspension is nullified, the push exerted by the spring 4 doesn't increase, because in such a moment its action is automatically unloaded;
- in conclusion the interdipendence of the resilient effect of the spring 4 with the amortizing effect of the suspension is assured, in the sense that the action exerted by the spring 4 is increasing as long as such an action is necessary; afterwards such an action is decreasing up to its complete exhaustion;
- instead of the screw 33, electronic autonatical adjustement device could be introduced, in such a way that a greater or a lower change of course of oil portion 16 into the flexible duct 23 could be influenced;
- the amortizing effect of the described suspension is conceived in the direction of a soft device, which could become rigid when necessary, i.e. when the suspension is compressed thanks to a substantially heavy action due to the ground or to the transfer of weights in the car, for instance during a braking process.

## Claims

1. A suspension system for cars and the like, comprising means (4) adapted to resiliently react against unevenness of the ground, amortization means (14,16, 12, 17, 18, 10, 15) of the oscillations caused by the recovery of said resilient means (4), and integrating means (16, 19, 21, 22, 29, 23, 24) of said resilient means (4) with said amortization means (14, 16, 12, 17, 18, 10, 15), adapted to increase in a substantially real time the load of said resilient means (4) when the suspension is operating, in such a way that they react on the normal trim of the car in conditions of substantial independence of each suspension from the other suspension, said resilient means comprising a pressure spring (4) whose top co-operates with a cover (3) fixed by a connection (1) to the body of the car and whose bottom is resting on the upper surface of a sleeve (6) slidable on an external surface of a chamber (7), wherein said sleeve (6) is provided with a circular duct (24) around the chamber (7), said cover (3) being fixed to a stem (8) slidable on a gasket (9) fixed to said chamber (7), and fixed to a piston (12), slidable in said chamber (7), said amortization means comprising an upper portion (14) and a lower portion (16) of an oil bath in said chamber (7), divided by said piston (12), and a plurality of channels (17,18) in said piston (12), for transferring respectively the oil of the upper portion (14) towards the lower portion (16) when said piston (12) rises, and the oil of the lower portion (16) towards the upper portion (14) when said piston (12) lowers, due to the impact of the suspension with the reaction caused by an unevenness of the ground, wherein the oil transfer from said upper portion (14) into said lower portion (16) is braked by a first set of amortization means in form of elastic blades (10) in said piston (12) and from said lower portion(16) into said upper portion (14) is braked by a second set of elastic blades (15) in said piston (12), which are more elastic than the first set of blades (10), **characterized in that** said integrating means comprise a duct (19) provided in said lower portion (16) of oil bath, feeding a chamber (22) by a first way (21) and said circular duct (24) of said sleeve (6) by a flexible duct (23) forming a second way, wherein said chamber (22) has a plate (29) movable upwards under the pressure of oil from said lower portion (16), against the action of a spring (32),said plate (29) being stopped upwards against an end of stroke screw (33) adjustable by screwing an upper plate (34) of said chamber (22), wherein the oil passing into said ducts ( 19,23) causes said sleeve (6) to be risen with an increase of the elastic energy stored by said spring (4).

## Patentansprüche

1. Ein Aufhängungsystem für Pkws und ähnliches, einschchließlich geeigneter Mittel (4) zur elastichen Reaktion gegen Grundunebenheiten Mittel (14,16,12,17,18,10,15) zur Federung von Shwingungen, die von den o.g. elastichen Mittel (4) ausgelöst werden, und Mittel (16,19,21,22,29,23,24) zur Integration der o.g. elastichen Mittel (4) mit den o.g. Federungsmittel (14,16,12,17,18,10,15) geeignet in einer grundsätlich reellen Zeit die Last der o.g. elastichen Mittel (4) zur erhöhen, wenn die Aufhängung in Betrieb ist, solchermaßen, daß sie auf die normale Lage des Pkws in einem Unhabängingkeitszustand jeglicher Aufhängung von der anderen reagiren, wobei o.g. elastiche Mittel eine Druckfeder (4) umfassen, deren Ende mit einem Deckel (3) zusammenwirkt, der mittels eine Verbindung (1) an die Karosserie des Pkws befestigt ist und dessen Basis auf der oberen Fläche einer Muffe (6) ruht, die zum Gleiten auf der Außenflächen einer Kammer (7) geeignet ist, wobei o.g. Muffe (6) ruht, die zum Gleiten auf Außenfläche einer Kammer (7) geeignet ist, wobei o.g. Muffe mit einer kreisförmigen Leitung (24) rund um die Kammer (7) versehen ist, o.g. Deckel (3) am einem Schaft (8) befestigt ist, der über eine Dichtung gleitet, befestigt an o.g. Kammer (7) oder befestigt an einem Kolben (12) in o.g. Kammer (7) gleitet, wobei o.g. Federungsmittel einen oberen Teil (14) und einen unteren Teil (16) eines Ölbades in o.g. Kammer (7), von o.g. Kolben (12) getrennt und eine Vielzahl von Leitungen (17,18) in o.g. Kolben (12) umfassen, um respektive das Öl des oberen Teils (14) auf den unteren Teil (16), wenn o.g. Kolben (12) hochfährt, zuzuführen, und das Öl des unteren Teils (16) auf den oberen Teil (14), wenn o.g. Kolben (12) hinunterfährt, zuzuführen, wegen des Aufpralls der Aufhängung mit der Reaktion, die von einer Unebenheit des Bodens ausgelöst wird, wobei die Ölzuführung von oberen Teil (14) in den unteren Teil (16) von einer ersten Reihe elasticher Blätter (10) von Federungsmitteln in o.g. Kolben (12) gebremst wird, und vom o.g. unteren Teil (16) in den o.g. oberen Teil (14) von einer zweiten Reihe elasticher Blätter (15) gebremst wird, die elasticher als die erste Reihe von Blättern ist, dabei **dadurch gekennzeichnet, dass** o.g. Integrationsmittel eine in o.g. unterem Teil (16) des Ölbades vorgesehene Leitung (19) umfassen, die eine Kammer (22) durch einen ersten Weg (21) und o.g. kreisförmige Leitung (24) dieser Muffe (6) durch eine flexible Leitung (23), die einen zwitewn Wweg bildet, versorgt, wobei o.g. Kammer (22) eine unter dem Druck des Öls des unteren Teil (16) nach oben bewegliche Platte (29) hat, gegen die Wirkung einer Feder (32), wobei diese Platte (29) gegen eine Arretierschraube (33) nach oben festgehalten ist, die dadurch Schrauben einer oberen Platte (34) der o.g. Kammer (22) verstellbar ist, wobei das durch diese Leitungen (19,23) fließende Öl diese Muffe (6) hochheben lässt mit einer Steigerung der von dieser Feder (4) gespeicherten elastichen Energie.

## Revendications

1. Un système de suspension pour automobiles et semblables, comprenant moyens (4) aptes à réagir élastiquement contre les aspérités du terrain, moyens de amortissement (14,16,12,17,18,10,15) des oscillations causées par la récupération desdits moyens élastiques (4) et moyens de intégration (16,19,21,22,29,23,24) desdits moyens élastiques (4) avec lesdits moyens de amortissement (14,16,12,17,18,10,15) aptes à augmenter dans un temps substantiellement réel de la charge desdits moyens élastiques (4) quand la suspension est opérationelle, afin qu' ils réagissent sur la normale assiette de l'automobile en conditions de substantielle indipendence de chaque suspension de l'autre suspension, lesdits moyens élastiques comprenant un ressort à pression (4) dont l'extrémité collabore avec un couvercle (3) fixé au moyen d'une connexion (1) à la carrosserie de l'automobile et dont la base s'appuye sur la surface supérieure d'un manchon (6) apte à glisser sur une surface extérieure d'une chambre (7) dans laquelle ledit monchon est pourvu d'une conduite circulaire (24) autour de ladite chambre (7), ledit couvercle (3) résultant fixé à une tige (8) roulante sur une garniture (9) fixée à ladite chambre et fixée à un piston (12) roulant dans ladite chambre (7), lesdits moyens amortissants comprenant une part supérieure (14) et une part inférieure (16) d'un bain d'huile dans ladite chambre (7), divisée par ledit piston (12) et une pluralité de canaux (17,18) dans ledit piston (12) pour transférer respectivement l'huile de la part supérieure (14) vers la part inférieure (16) quand ledit piston (12) se baisse à cause de l'impact de la suspension avec la réaction procurée par une aspérité du terrain, où le transfèrement de l'huile de la part supérieure (14) dans la part inférieure est freiné par une première série de lames élastiques (10) de moyens de amortissement dans ledit piston (12) et par ladite part inférieure (16) dans ladite part supérieure est freiné par une seconde série de lames élastiques (15) dans ce piston (12), qui sont plus élastiques que la première série de lames, **caractérisé en ce que** lesdits moyens de intégration comprendent une conduite (19) pourvue dans ladite part inférieure du bain d'huile, qui alimente une chambre (22) avec une première route (21) et ladite conduite circulaire (24) dudit monchon (6) avec une conduite flexible (23) qui forme une seconde route, où ladite chambre (22) a une plaque (29) qui est mobile vers l'haut sous la pression de l'huile de la part inférieure (16) contre l'action d'un ressort (32), ladite plaque (29) étant arrêtée vers l'haut par une vis d'arrêt (33) qui peut être réglée en vissent une plaque supérieure (34) de ladite chambre (22), où l'huile qui passe dans cettes conduites (19,23) fait soulever ledit monchon merci à l'augmentation de l'énergie élastique accumulée par ledit ressort (4).
